# EUROPÄISCHE PATENTANMELDUNG

(11) **EP 0 596 486 A1**
(43) Veröffentlichungstag der Anmeldung: **11.05.1994**
(21) Anmeldenummer: 93117859.4
(22) Anmeldetag: 04.11.1993
(51) Int. Cl.: A01B 29/04

(54) **Ackerwalze**

(30) Priorität: 06.11.1992 DE 4237951
(71) Anmelder: AGROTEK LANDMASCHINENERSATZTEILE GmbH, D-95448 Bayreuth (DE)
(72) Erfinder: Plannerer, Reinhold, D-95615 Marktredwitz (DE)
(74) Vertreter: Tergau, Enno, Dipl.-Ing.

(57) **Zusammenfassung**

Die Erfindung betrifft eine Ackerwalze mit mehreren auf einer gemeinsamen Achse (1) drehbar gelagerten Walzenscheiben (2) zur Bodenrückverfestigung und Schollenzerkleinerung und mehreren Reinigungsscheiben (3), die in Einzahl zwischen zwei benachbarten Walzenscheiben (2) auf der Achse drehbar angeordnet und in Radialrichtung verschiebbar sind. Die Walzenscheiben (2) bestehen aus zwei Halbscheiben (4) mit einer rechtwinklig zur Achse (1) verlaufenden Trennebene (5). Zwischen zwei Halbscheiben (4) ist eine Reinigungsscheibe (12) angeordnet.

## Beschreibung

Die Erfindung betrifft eine Ackerwalze mit den im Oberbegriff des Anspruches 1 genannten Merkmalen. Derartige Ackerwalzen sind unter dem Namen Cambridge-Walzen bekannt. Sie dienen dazu, landwirtschaftliche Anbauflächen beispielsweise nach einer Tiefenbearbeitung rückzuverfestigen und eine feinkrümelige Struktur der oberflächennahen Bodenschichten zu schaffen. Zu diesem Zweck weisen die bekannten Cambridge-Walzen mehrere auf einer gemeinsamen Achse drehbar angeordnete Walzenscheiben auf, deren Umfangsfläche bugartig vorspringt. Durch diese etwa nach Art einer Messerklinge oder eines Keils wirkende Ausgestaltung der Umfangsflächen der Walzenscheiben können Bodenschollen zerkleinert werden. Gleichzeitig wird durch das Eigengewicht der in der Regel aus Gußeisen bestehenden Ackerwalze eine Bodenverfestigung bewirkt. Zwischen zwei benachbarten Walzenscheiben ist jeweils eine sogenannte Reinigungsscheibe angeordnet. Diese ist drehbar und mit Radialspiel auf der Achse gelagert und ist beim Aufsetzen der Cambridge-Walze auf den Ackerboden in eine zur Achse exzentrische Lage verschiebbar, bei der der Umfang der Reinigungsscheibe über die Umfangsfläche der Cambridge-Walze hinaussteht. An der Umfangsfläche der Walzenscheibe anhaftende Bodenteile werden dadurch von der Umfangsfläche abgehoben und entfernt.

Der Nachteil der bekannten Cambridge-Walzen besteht darin, daß insbesondere feuchte und schwere Böden, beispielsweise Lehmböden, so fest an der Umfangsfläche der Walzenscheiben haften, daß nur die an die Reinigungsscheiben grenzenden Bereiche der Umfangsflächen der Walzenscheiben gereinigt werden können. Auf dem bugartig vorspringenden Scheitel der Walzenscheiben und den sich seitlich daran anschließenden Bereichen bleibt ein Bodenring haften, der mit zunehmender Bearbeitungsstrecke noch aufwächst und schließlich in plattenartige Stücke zerbricht und abfällt. Diese plattenartigen Stücke behindern die Ausbringung von Saatgut. Sie behindern außerdem den Saataufgang und spätere Pflege- und Erntearbeiten.

Davon ausgehend ist es die Aufgabe der Erfindung, eine Ackerwalze zu schaffen, bei der dieser Nachteil nicht auftritt. Die Lösung besteht darin, daß die Walzenscheiben aus zwei Halbscheiben mit einer rechtwinklig zur Achse der Ackerwalze verlaufenden Trennebene bestehen und daß zwischen den beiden Halbscheiben ebenfalls eine Reinigungsscheibe, im folgenden als Zwischenreinigungsscheibe bezeichnet, angeordnet ist. Auf diese Weise wird erreicht, daß der Scheitelbereich einer, nun aus zwei Halbscheiben bestehenden Walzenscheibe von anhaftenden Bodenteilen befreit werden kann. Durch die Maßnahme gemäß Anspruch 2 bilden zwei einander zugeordnete Halbschalen mit der dazwischen angeordneten Zwischenreinigungsscheibe eine etwa einer herkömmlichen Walzenscheibe einer Cambridge-Walze entsprechende Walzenscheibeneinheit. Durch die bugartig vorspringende Umfangsfläche einer solchen Walzenscheibeneinheit können Ackerschollen ebenso wie bei herkömmlichen Cambridge-Walzen leicht zerkleinert werden. Die Umfangsfläche kann jedoch auch anders gestaltet sein, etwa wie bei Croskill-Walzen.ln Anspruch 3 ist eine vorteilhafte Ausgestaltung der Umfangsflächen genannt.

Durch die Maßnahme gemaß Anspruch 4 wird gewährleistet, daß die Reinigungsscheiben und die Zwischenreinigungsscheiben eine Relativgeschwindigkeit zueinander aufweisen. Dadurch wirkt auf die anhaftenden Bodenteile nicht nur eine radial gerichtete und die Ablösung der Bodenteile von der Umfangsfläche bewirkende Kraft, sondern auch eine in Laufrichtung der Ackerwalze, also tangential gerichtete Scherkraft. Dies bewirkt eine zusätzliche Zerkleinerung der Ackerschollen. Insbesondere bei höheren Bearbeitungsgeschwindigkeiten kann dadurch eine lockere Krümelschicht erzeugt werden.

In den Ansprüchen 5 bis 8 sind vorteilhafte Weiterbildungen einer erfindungsgemäßen Ackerwalze angegeben. Durch die Lehre des Anspruches 8 wird ein Teil des sich zwischen Halbscheibe und Reinigungsscheibe befindlichen Trennspaltes abgedeckt. Bei herkömmlichen Cambridge-Walzen kommt es deshalb zu Störungen, weil sich in diesen Spalt oft Steine einklemmen und die Dreh- und Radialbeweglichkeit der Reinigungsscheiben blokkieren. Die Umfangsfläche der Walzenscheiben kann dann nicht mehr gereinigt werden. Die Folge ist, daß im Bereich einer blockierten Reinigungsscheibe ein Bodenring haften bleibt, der zusehends anwächst und schließlich in mehr oder weniger großen Teilstücken abfällt. Durch die nach Anspruch 8 vorgesehenen nockenartigen Vorsprünge wird ein Eindringen von Steinen und damit ein Blockieren der Reinigungsscheiben zum einen dadurch verhindert, daß ein Teil des Trennspaltes zwischen Reinigungsscheibe und benachbarter Halbscheibe abgedeckt ist. Zum anderen wirken die seitlichen Fortsätze aufgrund der in Umfangsrichtung wirksamen Relativbewegung zwischen Halb- und Reinigungsscheibe wie sich über den genannten Trennspalt fortbewegende Abstreifer. Die aus der Umfangsfläche der Reinigungsscheibe vorstehenden Nocken erhöhen außerdem die Zerkleinerungswirkung der Reinigungsscheiben, indem eine gegenüber gezackten Reinigungsscheiben erhöhte Anzahl von eine Keilwirkung ausübenden Kanten und Ecken vorhanden ist. Dieser Zerkleinerungseffekt wird noch dadurch erhöht, daß sich aufgrund ihrer unterschiedlichen Durchmesser Halbscheibe und Reinigungsscheibe in Umfangsrichtung relativ zueinander bewegen.

Durch die Maßnahme gemäß Anspruch 9 ist gewährleistet, daß sich die seitlichen Fortsätze der Vorsprünge praktisch ohne Zwischenraum mit ihren Unterseiten an die Umfangsfläche der Halbscheiben anlegen können. Auf diese Weise wird verhindert oder zumindest erschwert, daß sich Bodenteile und Steinchen zwischen Fortsatz und Umfangsfläche der Halbscheiben festsetzen und die Radialbewegung der Reinigungsscheiben behindern. In den Ansprüchen 12-14 sind vorteilhafte Abmessungsverhältnisse angegeben.

Die Erfindung wird anhand von in den beigefügten Zeichnungen dargestellten Ausführungsbeispielen näher erläutert. Es zeigen:
Fig. 1 einen Abschnitt einer erfindungsgemäßen Ackerwalze im Längsschnitt,
Fig. 2 eine Seitenansicht einer Walzenscheibe,
Fig. 3 einen Schnitt durch eine Walzenscheibe gemäß Linie 111-111 in Fig. 2,
Fig. 4 eine Seitenansicht einer Reinigungs- bzw. Zwischenreinigungsscheibe,
Fig. 5 einen Querschnitt durch eine Reinigungs- bzw. Zwischenreinigungsscheibeentlang Line V-V in Fig. 4,
Fig. 6 einen Abschnitt einer auf dem Boden aufliegenden Ackerwalze im Längsschnitt,
Fig. 7 eine Teilansicht einer weiteren Ausführungsform einer erfindungsgemäßen Ackerwalze im Längsschnitt,
Fig. 8 eine Zwischenreinigungsscheibe der Ackerwalze gemäß Fig. 7 in Seitenansicht,
Fig. 9 einen Schnitt durch eine Zwischenreinigungsscheibe gemäß Fig. 8 entlang der Linie VIII-VIII in Fig. 7, und
Fig. 10 eine Reinigungsscheibe einer weiteren Ausführungsform der erfindungsgemäßen Ackerwalze in Seitenansicht.

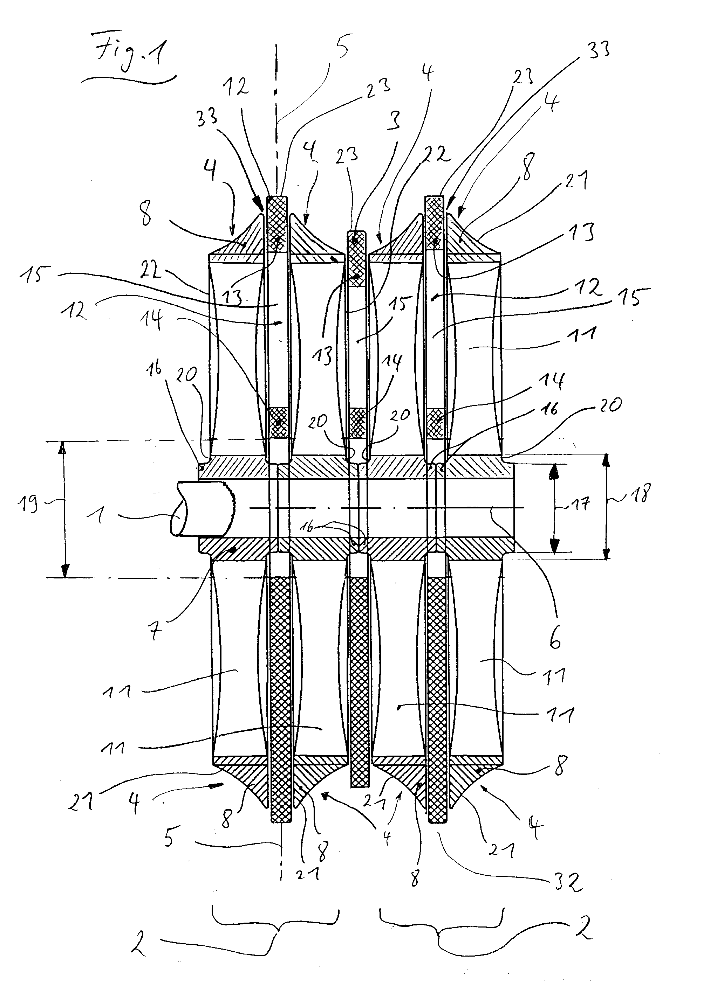

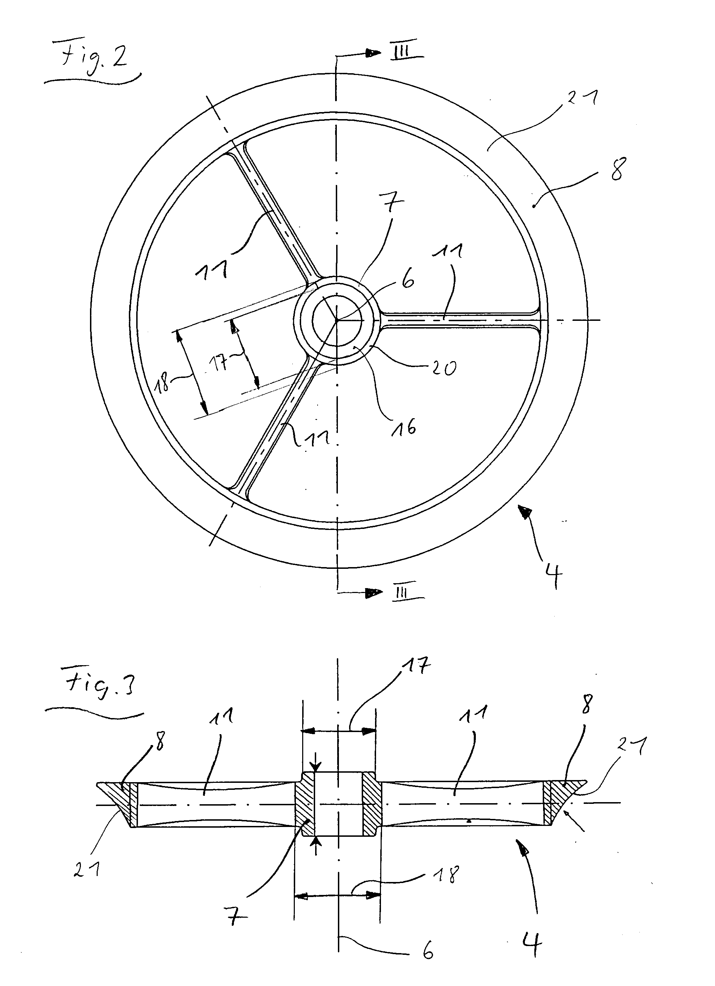

Wie aus Fig. 1 hervorgeht, setzt sich die erfindungsgemäße Ackerwalze aus einer Achse 1 und darauf drehbar angeordnet mehreren Walzenscheiben 2 und mehreren Reinigungsscheiben 3 zusammen. Die Walzenscheiben 2 bestehen aus zwei Halbscheiben 4. Die Trennebene 5 zwischen den beiden Halbscheiben 4 verläuft rechtwinklig zur Mittellängsachse 6 der Achse 1. Die Halbscheiben 4 sind aus einer Nabe 7, einem Außenring 8 und drei Außenring und Nabe miteinander verbindenden Speichen 11 aufgebaut (vgl. Fig. 2 und 3).

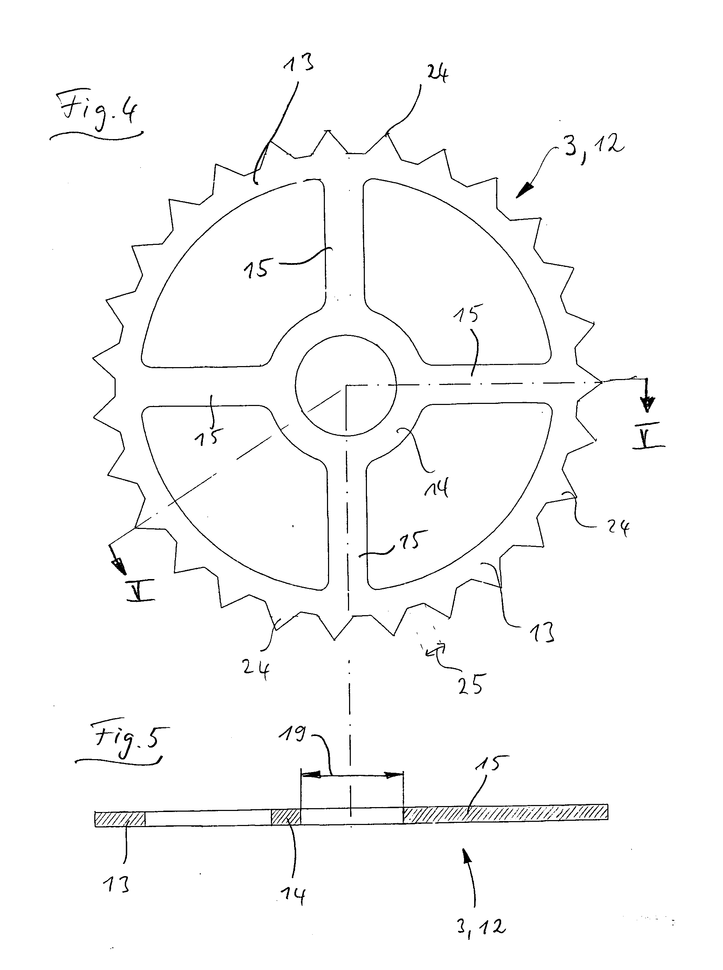

Zwischen zwei einander zugeordneten Halbscheiben 4 ist etwa in der Trennebene 5 eine Reinigungsscheibe angeordnet, die im folgenden als Zwischenreinigungsscheibe 12 bezeichnet wird. Die Zwischenreinigungsscheibe 12 besteht, wie aus Fig. 4 ersichtlich, im westenlichen aus einem Außenring 13, einer Nabe 14 und vier die genannten Teile verbindenden Speichen 15. Die Zwischenreinigungsscheibe 12 ist wie folgt zwischen zwei einander zugeordneten Halbscheiben 4 gelagert: Die Naben 7 der Halbscheiben 4 weisen auf ihrer Stirnseite einen Distanzring 16 auf, dessen Außendurchmesser 17 kleiner ist als der Außendurchmeser 18 der Nabe 7. Die Distanzringe 16 zweier benachbarter Halbscheiben 4 werden von der Nabe 14 der Zwischenreinigungsscheibe 12 umfaßt. Die Zwischenreinigungsscheiben 12 werden also von zwei aneinanderstoßenden Distanzringen gehalten. Der Naben-Innendurchmesser 19 der Zwischenreinigungsscheiben 12 ist größer als der Außendurchmesser 17 der Distanzringe 16, so daß die Zwischenreinigungsscheiben 12 mit Radialspiel darauf gelagert sind. Sie sind somit in Radialrichtung um eine Strecke verschiebbar, die der Differenz zwischen dem Innendurchmesser 19 der Nabe 14 und dem Außendurchmesser 17 der Distanzringe 16 entspricht. In Axialrichtung sind die Zwischenreinigungsscheiben 12 von einander zugewandten Stirnflächen 20 der Naben 7 gehalten.

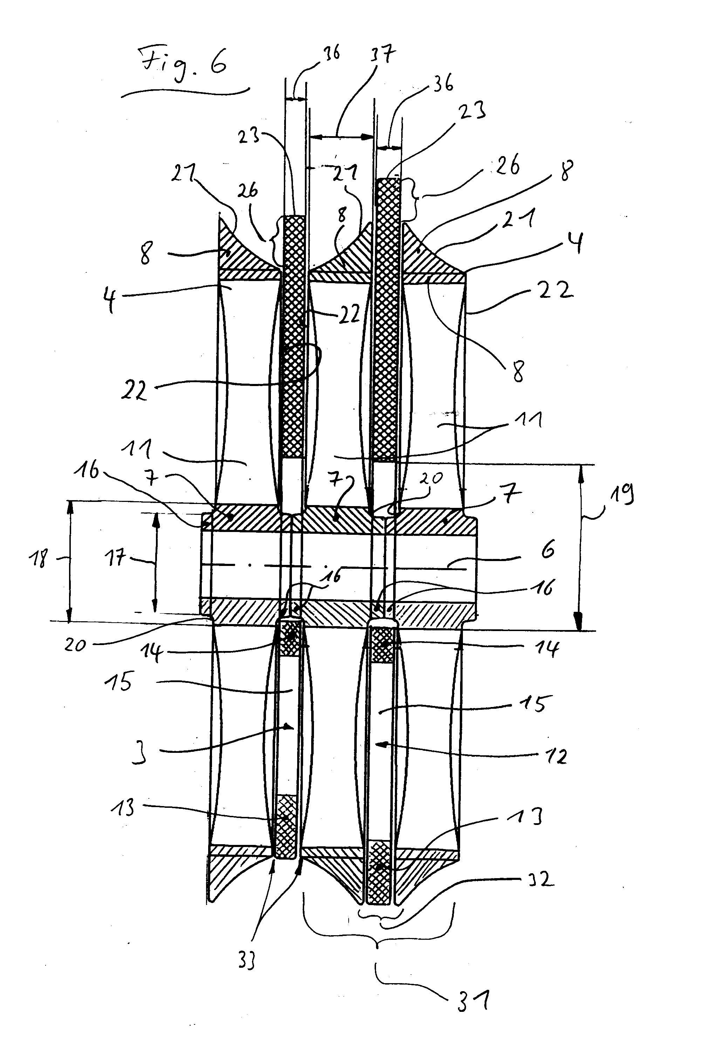

Die Umfangsfläche 21 der Halbscheiben 4 ist zu ihren den Reinigungsscheiben 3 zugewandten Außenseiten 22 hin abgeschrägt und bildet etwa die Mantelfläche eines Kegelstumpfes. Die Umfangsflächen 21 sind außerdem konkav gekrümmt. Die Umfangsfläche 23 der Reinigungsscheiben 3 und der Zwischenreinigungsscheiben 12 weist Zakken 24 auf, ist also nach Art eines Zahnkranzes ausgebildet. Die Zacken 24 sind über den Umfang der Reinigungs- 3 und Zwischenreinigungsscheiben 12 gleichmäßig und mit Umfangsabstand 25 verteilt (vgl. Fig. 4 und 5).

Zwischen zwei Walzenscheiben 2 ist jeweils eine Reinigungsscheibe 3 angeordnet. Sie wird auf der Achse 1 auf die gleiche Weise gehalten wie eine Zwischenreinigungsscheibe 12: Ihre Nabe 14 umgreift mit Radialspiel zwei aneinanderstoßende Distanzringe 16.

In Fig. 6 ist die Situation einer auf dem Boden aufliegenden Ackerwalze dargestellt. Die Reinigungsscheiben 3 und die Zwischenreinigungsscheiben 12 sind dabei radial nach oben in eine zur Achse 1 exzentrische Lage verschoben. Die Reinigungsscheiben 3 und die Zwischenreinigungsscheiben 12 stehen in dieser Lage auf der Oberseite der Ackerwalze mit einem Überstand 26 über die Umfangsfläche 21 der Halbscheiben 4 hinaus. Die Größe des Überstands 26 entspricht dabei der Differenz aus dem Innendurchmesser 19 der Naben 14 und dem Außendurchmesser 17 der Distanzringe 16. Aus Fig. 6 ist ersichtlich, daß Reinigungsscheibe 3, Zwischenreinigungsscheibe 12 und Halbscheibe 4 unterschiedliche Durchmesser aufweisen. Daraus ergibt sich, daß sie sich mit unterschiedlichen Geschwindigkeiten rotieren und Relativbewegungen in Umfangsrichtung zueinander ausführen.

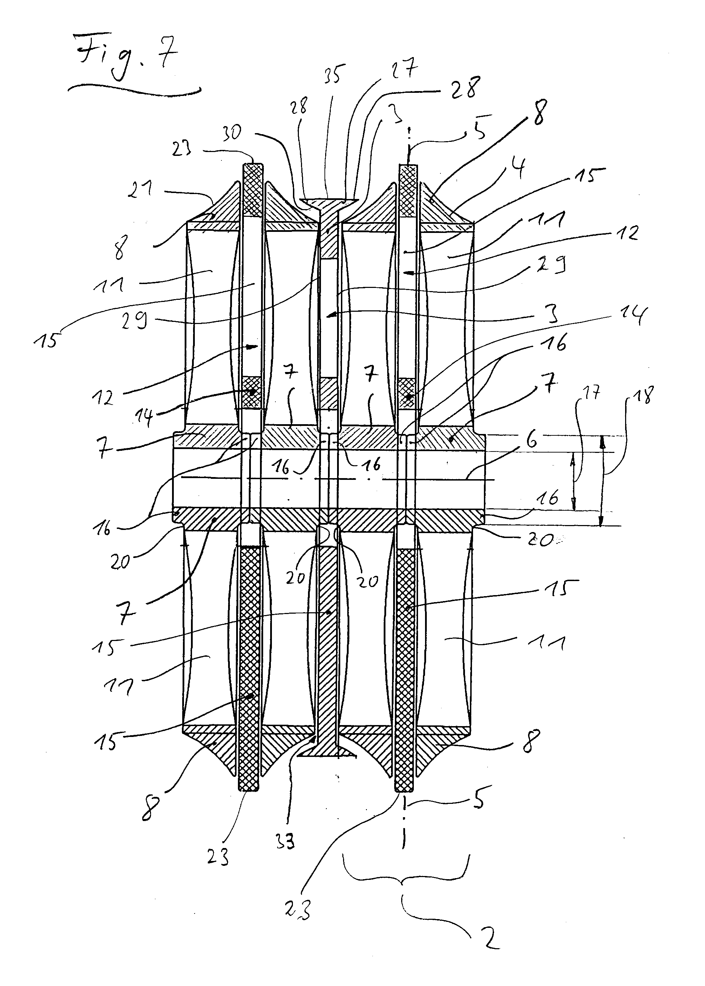

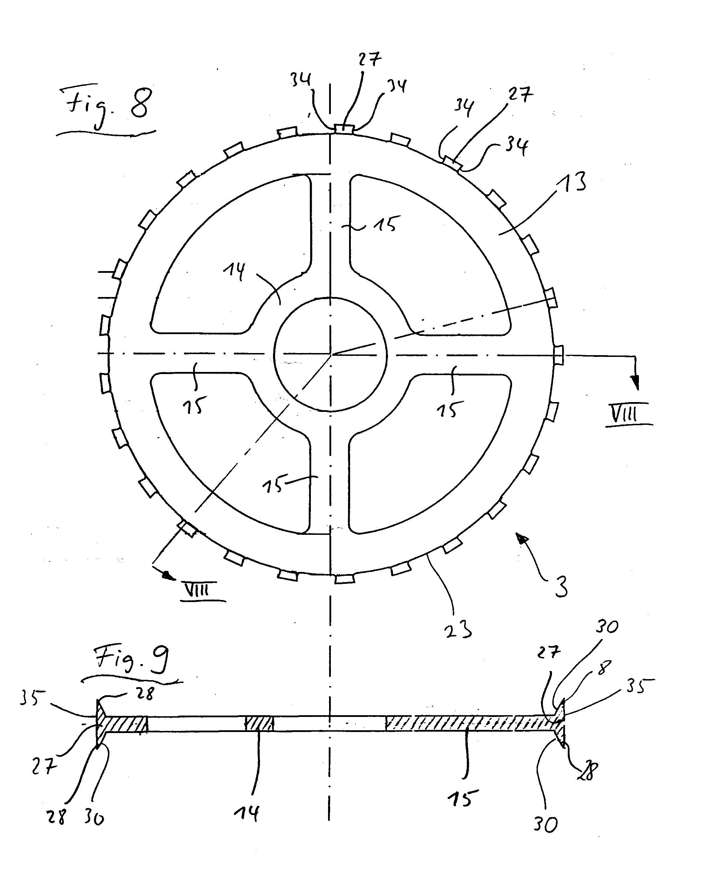

Die Fig. 7 bis 9 betreffen ein weiteres Ausführungsbeispiel einer erfindungsgemäßen Ackerwalze. Der Unterschied zur oben beschriebenen Ausführungsform besteht darin, daß die Renigungsscheiben 3 auf ihrer Umfangsfläche 23 radiale Vorsprünge 27 aufweisen. Die Vorsprünge 27 ragen mit seitlichen Fortsätzen 28 über die Seitenflächen 29 der Renigungsscheiben 3 hinaus und überdekken teilweise die Umfangsfläche 21 der Halbscheiben 4. Die Unterseite 30 der Fortsätze 28 weist eine der Krümmung der Umfangsflächen 21 entsprechende konvexe Krümmung auf. Die in Umfangsrichtung weisenden Seitenflächen 34 der Fortsätze 28 verlaufen parallel zueinander. Die Oberseite 35 und die Unterseite 30 der Fortsätze 28 bilden einen spitzen Winkel, die Fortsätze 28 sind somit im Querschnitt gesehen nach Art eines Keiles ausgebildet.

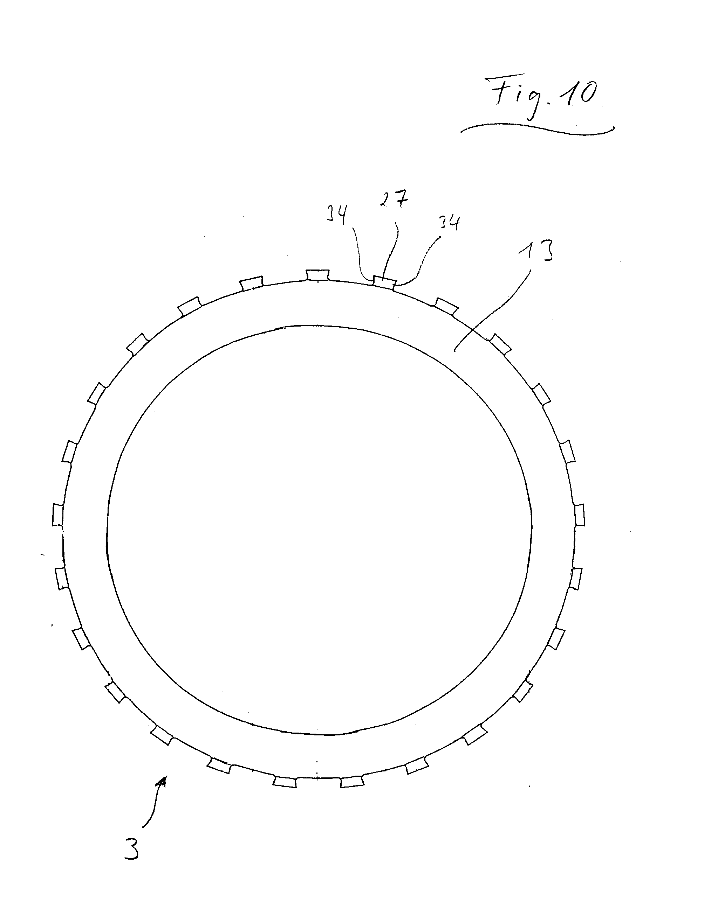

In Fig. 10 ist eine Reinigungsscheibe 3 dargestellt, die nur aus einem Außenring 13 besteht. Die Umfangsfläche 23 des Außenrings weist wie die oben beschriebenen Reinigungsscheiben Vorsprünge 27 mit seitlich abstehenden Fortsätzen 28 auf. Die Reinigungsscheibe 3 wird in Radialrichtung durch die Fortsätze 28 gehalten. Ihre Unterseiten 30 wirken dazu mit der Umfangsfläche 21 der Halbscheiben 4 als Gegenlagerfläche zusammen. In axialer Richtung werden die Reinigungsscheiben 3 im Montagezustand durch die benachbarten Halbscheiben 4 gehalten. Der Vorteil dieser Ausführungsform liegt vor allem in der Gewichts- und Materialeinsparung sowie in einem reduzierten fertigungstechnischen Aufwand. Die erfindungsgemäße Ackerwalze kann dadurch kostengünstiger und mit geringerem Gesamtgewicht hergestellt werden.

Im folgenden wird die Arbeitsweise einer erfindungsgemäßen Ackerwalze beschrieben. In der Arbeitsstellung gem. Fig. 7 liegt die Ackerwalze auf dem Boden auf und dringt mit den Umfangsflächen 21 ihrer Walzen- 2 bzw. Halbscheiben 4 mehr oder weniger tief in den Ackerboden ein. Dieses Eindringen wird im wesentlichen durch das Eigengewicht der in der Regel aus Gußeisen bestehenden Ackerwalze hervorgerufen. Die in Radialrichtung beweglichen Reinigungs- und Zwischenreinigungsscheiben 3,12 werden in eine zur Achse 1 exzentrische Lage verschoben (siehe Fig. 6). Sie liegen dabei mit ihrer Nabe 14 unterseits an den Distanzringen 16 an.

Die Ackerwalze wird über den Ackerboden gezogen und dabei die Walzenscheiben 2 und die Reinigungs- und Zwischenreinigungsscheiben 12 in Rotation versetzt. Durch das Eigengewicht der Akkerwalze tritt eine Rückverfestigung der oberflächennahen Bodenschichten ein. Durch die bugartig vorspringende Arbeitsfläche 31 der Walzenscheiben 2 werden Bodenschollen zerkleinert. Die Arbeitsfläche 31 dringt dabei mit ihrem Scheitel 32 in die Bodenschollen ein und treibt sie nach Art eines Keils auseinander. An der Umfangsfläche 21 der Halbscheiben 4 und am Scheitel 32 der Walzenscheibe 2 anhaftende Bodenteile werden durch die über die Umfangsfläche 21 der Halbscheiben hinausstehenden Reinigungs- und Zwischenreinigungsscheiben abgehoben und fallen auf den Boden zurück. Die anhaftenden Bodenteile werden dabei zerkleinert. Die Zerkleinerungswirkung der Reinigungs- und Zwischenreinigungsscheiben3,12 wird dadurch unterstützt, daß sie aufgrund ihres zu den Halbscheiben 4 unterschiedlichen Durchmessers eine Relativbewegung zu diesen ausführen und eine Scherwirkung auf die anhaftenden Bodenteile ausüben. Bei der erfindungsgemäßen Akkerwalze ist dieser Zerkleinerungseffekt aufgrund unterschiedlicher Relativgeschwindigkeiten besonders ausgeprägt, da jeder Halbscheibe 4 auf der einen Seite eine Reinigungsscheibe 3 und auf der anderen Seite eine Zwischenreinigungsscheibe 12 benachbart ist, die beide eine Relativbewegung zur Halbscheibe 4 ausführen. Der Zerkleinerungseffekt, der naturgemäß mit höherer Laufgeschwindigkeit der Walze zunimmt, ist bei den erfindungsgemäßen Ackerwalzen stärker ausgeprägt als bei herkömmlichen Cambridge-Walzen. Der besondere Vorteil der erfindungsgemäßen Ackerwalze besteht darin, daß damit auch schwere und feuchte Boden, wie beispielsweise Lehm- oder Lettenböden bearbeitet werden können. Mit herkömmlichen Cambridge-Walzen ist dies praktisch nicht möglich, da sich im Scheitelbereich der Walzenscheiben ein Bodenring aufbauen und schließlich in Form von plattenartigen Teilstücken von den Walzenscheiben abfallen würde. Mit der erfindungsgemäßen Ackerwalze lassen sich aber auch normale Böden bearbeiten, die infolge eines gewissen Feuchtigkeitsgrades zum Kleben neigen. Mit herkömmlichen Ackerwalzen muß erst ein größerer Austrocknungsgrad der Ackerflächen nach Regenfällen abgewartet werden.

Die den Fig. 7 bis 9 entsprechende Ausführungsform einer erfindungsgemäßen Ackerwalze arbeitet im Prinzip wie oben beschrieben. Durch die Vorsprünge 27 der Reinigungsscheiben 3 ist jedoch die Zerkleinerungswirkung auf an den Umfangsflächen 21 anhaftende Bodenteile und auf Akkerschollen erhöht. Durch die seitlich abstehenden Fortsätze 28 wird die Wirkbreite 36 der Reinigungsscheiben 3 vergrößert. Außerdem ist die Keilwirkung auf Bodenschollen infolge der Kanten und Ecken der Vorsprünge 27 erhöht. Ein weiterer vorteilhafter Effekt der Vorsprünge 27 besteht darin, daß sie den Trennspalt 33 zwischen Reinigungsscheibe 3 und Halbscheibe 4 abdecken und das Eindringen von Steinen, Pflanzenteilen u.ä. verhindern oder zumindest erschweren. Das Eindringen von Material in den genannten Trennspalt 33 führt nämlich zu einer Blockade der Radial- und Drehbewegung der Reinigungsscheiben. Die Folge ist, daß sich Bodenteile ungehindert an den Umfangsflächen 21 festsetzen und ungehindert zu Bodenringen aufwachsen können.

Die erfindungsgemäße Ackerwalze kann in allen üblichen Baugrößen ausgeführt sein. Als zweckmäßig hat es sich jedoch erwiesen, wenn das Verhältnis der Wirkbreite 36 (vgl. Fig. 6) der Reinigungs- bzw. Zwischenreinigungsscheiben zur Wirkbreite 37 der Halbscheiben 4 (vgl. Fig. 6) Werte aufweist, die im Bereich von 1:2,5 bis 1:10 liegen.

### Bezugszeichenliste

1 Achse
2 Walzenscheibe
3 Reinigungsscheibe
4 Halbscheibe
5 Trennebene
6 Mittellängsachse
7 Nabe
8 Außenring
11 Speicher
12 Zwischenreinigungsscheibe
13 Außenring
14 Nabe
15 Speiche
16 Distanzring
17 Außendurchmesser
18 Außendurchmeser
19 Innendurchmesser
20 Stirnfläche
21 Umfangsfläche
22 Außenseite
23 Umfangsfläche
24 Zacke
25 Umfangsabstand
26 Überstand
27 Vorsprung
28 Fortsatz
29 Seitenfläche
30 Unterseite
31 Arbeitsfläche
32 Scheitel
33 Trennspalt
34 Seitenfläche
35 Oberseite
36 Wirkbreite
37 Wirkbreite

## Patentansprüche

1. Ackerwalze mit
- mehreren auf einer gemeinsamen Achse (1) drehbar gelagerten Walzenscheiben (2) mit einer zur Bodenrückverfestigung und Schollenzerkleinerung ausgebildeten Umfangsfläche, (21) und
- mehreren Reinigungsscheiben (3), die in Einzahl zwischen zwei benachbarten Walzenscheiben (2) auf der Achse (1) drehbar angeordnet sind und zur Reinigung der Umfangsfäche (21) der Walzenscheiben (2) von anhaftenden Bodenteilen bei Bodenauflage der Ackerwalze in eine zur Achse (1) exzentrische Lage radial verschiebbar sind, in der sie über die Umfangsfläche der Walzenscheiben hinausstehen,
dadurch gekennzeichnet,
- daß die Walzenscheiben (2) aus 2 Halbscheiben (4) mit einer rechtwinklig zur Achse verlaufenden Trennebene (5) bestehen und daß zwischen den beiden Halbscheiben (4) ebenfalls eine Reinigungsscheibe, nämlich eine Zwischenreinigungsscheibe (12), angeordnet ist.

2. Ackerwalze nach Anspruch 1,
dadurch gekennzeichnet,
daß die Umfangsfläche (21) der Halbscheiben (4) zu ihren den Reinigungsscheiben (3) zugewandten Außenseiten (22) hin abgeschrägt sind und etwa die Mantelfläche eines Kegelstumpfes bilden.

3. Ackerwalze nach Anspruch 2,
dadurch gekennzeichnet,
daß die Umfangsflächen (21) der Halbscheiben (4) konkav gekrümmt sind.

4. Ackerwalze nach Anspruch 3,
dadurch gekennzeichnet,
daß Reinigungsscheibe (3) und Zwischenreinigungsscheibe (12) unterschiedliche Durchmesser aufweisen.

5. Ackerwalze nach Anspruch 3 oder 4,
dadurch gekennzeichnet,
daß der Krümmungsradius der Umfangsflächen (21) einen Wert von 20 mm-200 mm aufweist.

6. Ackerwalze nach einem oder mehreren der Ansprüche 1-5,
dadurch gekennzeichnet,
daß die Umfangsfläche der Reinigungs-und/oder Zwischenreinigungsscheiben (3,12) Zacken (24) nach Art eines Zahnrades aufweist.

7. Ackerwalze nach Anspruch 6,
dadurch gekennzeichnet,
daß die Zacken (24) mit Umfangsabstand zueinander angeordnet sind.

8. Ackerwalze nach einem oder mehreren der Ansprüche 1-6,
dadurch gekennzeichnet,
daß die Umfangsfläche der Reinigungsscheiben radiale Vorsprünge (27) aufweist, die beidseitig mit einem Fortsatz (28) über die Seitenflächen (29) der Reinigungsscheibe (3) hinausstehen und die an die Reinigungsscheiben angrenzenden Umfangsflächenbereiche der Halbscheiben (4) teilweise überdecken.

9. Ackerwalze nach Anspruch 8,
dadurch gekennzeichnet,
daß die den Halbscheiben (4) zugewandten Unterseiten (30) der Fortsätze (28) eine zur Umfangsfläche (21) der Halbscheiben (4) komplementäre Krümmung aufweisen.

10. Ackerwalze nach Anspruch 9,
dadurch gekennzeichnet,
daß die Vorsprünge an die Reinigungsscheiben einstückig angeformt sind.

11. Ackerwalze nach einem oder mehreren der Ansprüche 1-10,
dadurch gekennzeichnet,
daß die Halbscheiben (4), die Reinigungsscheiben (3) und die Zwischenreinigungsscheiben (22) im wesentlichen aus einer Nabe (14), einem Außenring (13) und mehreren Nabe und Außenring verbindenen Speichen (15) bestehen.

12. Ackerwalze nach Anspruch 11,
dadurch gekennzeichnet,
daß die Naben (14) der Halbscheiben (4) auf ihren beiden Stirnseiten jeweils einen Distanzring (16) aufweisen, und zwei aneinandergrenzende Distanzringe eine Reinigungs- bzw. eine Zwischenreinigungsscheibe halten, wobei deren Naben-Innendurchmesser (19) größer ist als der Außendurchmesser (18) der Distanzringe.

13. Ackerwalze nach einem oder mehreren der vorangegangenen Ansprüche 1-12,
dadurch gekennzeichnet,
daß das Verhältnis des Außendurchmessers der Distanzringe (16) zum Innendurchmesser (19) der Nabe (14) der Reinigungs- und Zwischenreinigungsscheiben (3,12) Werte aufweist, die im Bereich von 1:1,3 bis 1:2 liegen.

14. Ackerwalze nach einem oder mehreren der vorangegangenen Ansprüche,
dadurch gekennzeichnet,
daß das Verhältnis der Wirkbreite der Reinigungs- bzw. Zwischenreinigungscheiben (3,12) zur Wirkbreite der Halbscheiben (4) Werte aufweist, die im Bereich von 1:2,5 bis 1:10 liegen.
